# EUROPEAN PATENT APPLICATION

(11) **EP 2 466 282 A1**
(43) Date of publication of application: **20.06.2012**
(21) Application number: 11193202.6
(22) Date of filing: 13.12.2011
(51) Int. Cl.: G01J 5/00, G01J 5/08

(54) **System and method for measuring temperature**

(30) Priority: 17.12.2010 US 971915
(71) Applicant: General Electric Company, Schenectady, New York 12345 (US)
(72) Inventor: Schuetz, Tobias, Niskayuna, NY New York 12309 (US); Roesner, Robert, Niskayuna, NY New York 12309 (US); Schroeder, Stefan, Niskayuna, NY New York 12309 (US); Tourbier, Dietmar, Niskayuna, NY New York 12309 (US); Kyrberg, Karl, Niskayuna, NY New York 12309 (US)
(74) Representative: Bedford, Grant Richard

(57) **Abstract**

Embodiments presented herein are directed to a system 100 comprising, a semiconductor device including a semiconductor junction, an optical fiber 112, a proximal end of said optical fiber 112 in electromagnetic communication with said semiconductor junction, and a processing unit in electromagnetic communication with a distal end of said optical fiber, said processing unit capable of receiving electromagnetic information available at said distal end and processing the electromagnetic information.

## Description

Various embodiments presented herein relate generally to the area of semiconductor devices. More specifically, embodiments presented herein relate to the area of high power semiconductor device systems.

An extant galvanometric method of measuring temperature of a semiconductor junction involves use of a thermocouple that is in thermal communication with the semiconductor junction. However, the employability of this method may be limited due to electromagnetic interference between the thermocouple (which in order to provide a read-out needs to be biased), and for example, the semiconductor junction. In particular, the ability to operate the semiconductor device reliably at high voltage levels (that is, at voltage levels approaching the voltage level at which peak output of the semiconductor device is obtained) may be compromised when a thermocouple is used to monitor the temperature of the semiconductor junction. Furthermore, the presence of metallic thermocouple components in the vicinity of the semiconductor device can introduce a risk of inadvertent electrical shorting of portions of the semiconductor device.

Another extant galvanometric method of measuring temperature of a semiconductor junction involves the measurement of forward voltage changes of the semiconductor junction. However, the employability of this method may be limited since the operation of the semiconductor device needs to be interrupted in order to make the forward voltage change measurements. Furthermore, the smallness of the forward voltage changes imposes practical difficulties on their accurate measurement.

Another extant method of measuring temperature of a semiconductor junction involves the measurement of temperature of the base plate of the semiconductor device. However, the employability of this method may be limited unless an accurate thermal model of the heat conduction between the semiconductor junction and base plate is available. Furthermore, in the event of any change in the thermal link between the semiconductor device and base plate (for example, if the semiconductor device lifts off of the base plate), the accuracy of the model may be compromised.

Another extant method of measuring temperature of a semiconductor junction involves the use of an infra red camera to obtain a thermal image of the semiconductor junction. However, the employability of this method may be limited since immediate access to the semiconductor junction is usually required, which requirement imposes the condition that the semiconductor device not be encapsulated within a protective housing.

A system via which one is able to reliably monitor the temperature of a semiconductor junction without compromising the ability to operate the semiconductor device, and which system has a design that is amenable to being retro fitted within existing installations of semiconductor devices which would benefit from such monitoring, would therefore be highly desirable.

Various embodiments presented herein are directed to a system comprising, a semiconductor device including a semiconductor junction, an optical fiber, a proximal end of said optical fiber in electromagnetic communication with said semiconductor junction, and a processing unit in electromagnetic communication with a distal end of said optical fiber, said processing unit capable of receiving electromagnetic information available at said distal end and processing the electromagnetic information.

Various embodiments presented herein are directed to a method comprising, collecting electromagnetic information from a semiconductor junction of a semiconductor device via a proximal end of an optical fiber for transmission therealong to a processing unit via a distal end of said optical fiber, and processing, within said processing unit, the electromagnetic information received via said distal end of said optical fiber.

Various embodiments presented herein are directed to a method comprising, providing an optical fiber having opposing proximal and distal ends, disposing said proximal end of said optical fiber in contact with a semiconductor junction of a semiconductor device in a manner that electromagnetic information from said semiconductor junction is received at said proximal end so as to propagate along said optical fiber, providing a processing unit configured to receive the electromagnetic information via said distal end of said optical fiber, and processing the electromagnetic information within said processing unit to estimate a temperature of said semiconductor junction.

Various advantages and features will be more readily understood from the following detailed description that is provided in connection with the accompanying drawings, in which:
FIG. 1 depicts a semiconductor device system, in accordance with one embodiment.
FIG. 2 depicts a method, in accordance with one embodiment.
FIG. 3 depicts a method, in accordance with one embodiment.
FIG. 4 presents representative results of monitoring of the temperature of a semiconductor junction, in accordance with one embodiment.

In the following description, whenever a particular aspect or feature of an embodiment is said to comprise or consist of at least one element of a group and combinations thereof, it is understood that the aspect or feature may comprise or consist of any of the elements of the group, either individually or in combination with any of the other elements of that group.

As described in detail below, embodiments presented herein may enable monitoring of the temperature of the semiconductor junction within a semiconductor device. For example, embodiments may allow for the monitoring of semiconductor junction temperature while the semiconductor device is in operation with no untoward burden being placed upon the semiconductor device due the monitoring. The temperature of the semiconductor junction within a semiconductor device can, in some cases, provide an indication of the health of a semiconductor device and/or of the system incorporating the semiconductor device.

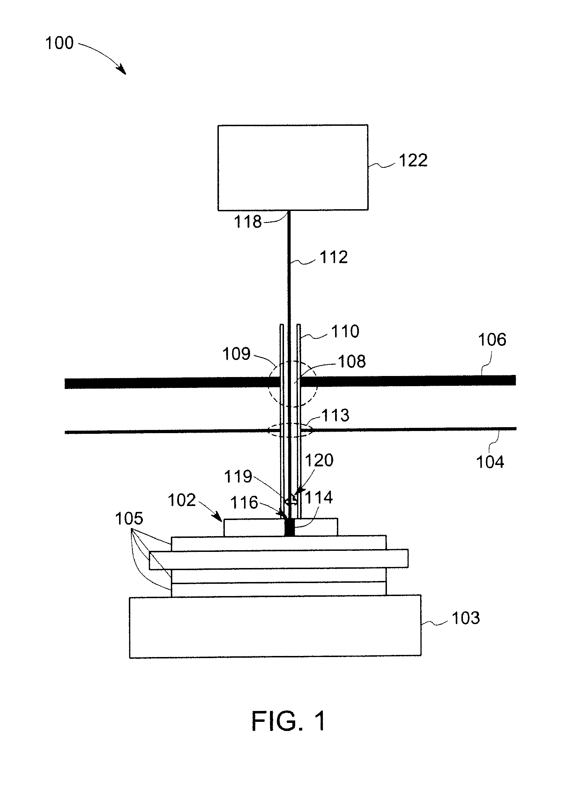

FIG. 1 depicts a semiconductor device system 100. The semiconductor device system 100 may include a semiconductor device 102, for example, a high power semiconductor device. The semiconductor device system 100 further may include a base plate 103 and other components 105, the purposes of which would be known to one of skill in the art. The semiconductor device 102 may be disposed so that it sits on the base plate 103 via other components 105 of the semiconductor device system 100. The semiconductor device 102 includes a semiconductor junction 114 and may be conformally covered by a protective layer 104 (abstract representation). which may be electrically insulating. The semiconductor device 102, the base plate 103, the other components 105, and the protective layer 104, together may be disposed within a housing 106 (abstract representation), which housing may include an orifice 108 at location 109. A protective tubing 110 may pass through the orifice 108, which protective tubing 110 may be electrically insulating. An optical fiber 112, including a proximal end 116 and a distal end 118, may be disposed within the protective tubing 110. The protective tubing 110, and also the optical fiber 112, may further pass through the protective layer 104 at location 113 of the semiconductor device system 100.

Quite generally therefore, embodiments of the invention include semiconductor device systems (for instance, of type 100) capable at least of obtaining and monitoring parameters related to the health of its constituent components. The semiconductor device system can include a semiconductor device (for instance, of type 102) including a semiconductor junction (for instance, of type 114). The semiconductor device system can further include an optical fiber (for instance, of type 112). The proximal end (for instance, of type 116) of said optical fiber can be in electromagnetic communication with said semiconductor junction (the immediately preceding mention of "electromagnetic communication" refers, in one instance, to the collection by the proximal end 116 of the optical fiber 112 of portion 119 of electromagnetic radiation 120 emitted by the semiconductor junction 114 as is discussed at least in context of FIG. 1). The semiconductor device system may further include a processing unit (for instance, of type 122) which can be in electromagnetic communication with a distal end (the immediately preceding mention of "electromagnetic communication" refers, in one instance, to the availability via the distal end 118 of the optical fiber 112 of portion 119 of electromagnetic radiation 120 emitted by the semiconductor junction 114 at the processing unit 122 as is discussed at least in context of FIG. 1), of said optical fiber, said processing unit capable of receiving electromagnetic information (the immediately preceding mention of "electromagnetic information" refers, in one instance, to information about physical parameters of the semiconductor junction 114 such as the temperature of the semiconductor junction 114 that is contained within the portion 119 of the electromagnetic radiation 120 emitted by the semiconductor junction 114 as is discussed at least on context of FIG. 1), available at said distal end and processing the electromagnetic information. In one embodiment, said semiconductor junction is configured to produce electromagnetic information having wavelengths that lie within the infra red and visible spectrums. In one embodiment, said processing the electromagnetic information includes processing the electromagnetic information to estimate a temperature of said semiconductor junction.

The proximal end 116 of the optical fiber 112 may be disposed so as to be in electromagnetic communication with the semiconductor junction 114. For example, the proximal end 116 of the optical fiber 112 may be disposed so as to be able to collect and transmit a portion 119 of electromagnetic radiation 120, which may be emitted by the semiconductor junction 114 during operation of the semiconductor device 102. In some embodiments, the proximal end 116 of the optical fiber 112 may be disposed so as to be in direct physical contact with the semiconductor junction 114.

A processing unit 122 can be in electromagnetic communication with the distal end 118 of the optical fiber 112. The processing unit 122 can be configured so as to be capable of receiving and processing electromagnetic information. For example, the processing unit 122 can include electromagnetic energy sensing elements, transducer elements, and a microprocessor disposed so as to convert able to convert and process the electromagnetic information available at said distal end 118. The distal end 118 of the optical fiber 112 may be disposed so that substantially the portion 119 of the electromagnetic radiation 120 that is transmitted through the optical fiber 112 can be presented, via the distal end 118, for reception by the processing unit 122. The processing unit 122 can then process the received electromagnetic radiation 119 to obtain for example, information about the temperature of the semiconductor junction 114.

Based on the discussions herein, those of skill in the art may recognize that semiconductor device systems (for instance, of type 100) disclosed herein are potentially capable of monitoring parameters related to the health of their constituent parts in a non-galvanometric manner. Such non-galvanometric measurements tend to present little if any electromagnetic interference burden onto the semiconductor device system on which the measurements are being made, potentially resulting thereby at least in an enhancement in one's ability to operate the semiconductor device reliably close to the design power upper limit of operation of a constituent semiconductor device of the semiconductor device system.

Embodiments of the semiconductor device system disclosed herein may present several potential enhancements over extant semiconductor device systems, as are now discussed with reference to FIG. 1.

Since optical fibers (for instance, of type 112) can be made electrically insulating, and the protective tubing can also be electrically insulating, therefore the electrical insulation between different parts of the semiconductor device 102 may remain undisturbed at and around the location 113 wherein the protective tubing 110 and the optical fiber 112 pass through the protective layer 104. Similarly, the electrical insulation between different parts of the semiconductor device 102 may remain undisturbed at and around the location 109 wherein the protective tubing 110 and the optical fiber 112 pass through the housing 106.

Further, since the temperature of the semiconductor junction 114 is estimated based upon processing of information (that is, electromagnetic radiation; in one instance, of type 119) obtained directly from the semiconductor junction 114, and not based upon, for instance, indirect information about the semiconductor junction 114, the accuracy and reliability of the temperature measurement may be enhanced. For example, an extant method of estimating the temperature within a semiconductor device system 100 may perform an estimate of the temperature of a semiconductor junction based upon indirect measurements, such as for instance, via a thermometer that is in thermal contact with the semiconductor junction. Such an estimate would be dependent on the accuracy of the thermal model that is used to approximate the flow of heat energy between the semiconductor junction 114 and the thermometer, which accuracy may be limited by the practicalities and variability of the thermal contact condition.

Furthermore, and as also discussed earlier, since embodiments of the presently disclosed semiconductor device system are capable of monitoring parameters related to the health of their constituent parts in a non-galvanometric manner, hence the range over which the constituent semiconductor device 102 may be operated reliably when measurements (for the purposes of said monitoring) of health related parameters of any one or more parts of the semiconductor device system 100 are being performed may remain substantially unaltered from the range over which the semiconductor device 102 may be operated reliably when such measurements of health related parameters of the semiconductor device system 100 are not being performed. In other words, monitoring of health related parameters of, for instance, the semiconductor device 102, when performed via embodiments disclosed herein or their equivalents thereof, may not impose a burden on the range of operability of the semiconductor device 102. That is, the ability of the semiconductor device 102 to operate substantially across the design range of its operability may not be compromised when they are used within embodiments of the presently disclosed systems and methods. Again, the temperature of the semiconductor junction 114 may be estimated and monitored in real time enabling, in real time, the performance of corrective action in case of any eventuality related to the semiconductor device system 100.

Another potential advantage of some semiconductor device systems consistent with semiconductor device systems disclosed herein relates to the manner in which semiconductor device systems may be realized. For instance, such semiconductor device systems may be realized by retrofitting extant semiconductor device (for instance, of type 102) installations with protective tubing (for instance, of type 110) within which passes an optical fiber (for instance, of type 112) and disposing the optical fiber in a manner as discussed in context of FIG. 1 and methods 200 and 300 below. Other components such as a processing unit (for instance, of type 122) may also be pressed into service in a manner discussed in context of FIG. 1 in order to realize "retrofit" embodiments of the semiconductor device system.

Quite generally therefore, embodiments presented herein include methods for obtaining health related parameters, such as for instance the temperature, of a semiconductor junction (for instance, of type 114) within a semiconductor device (for instance, of type 102).

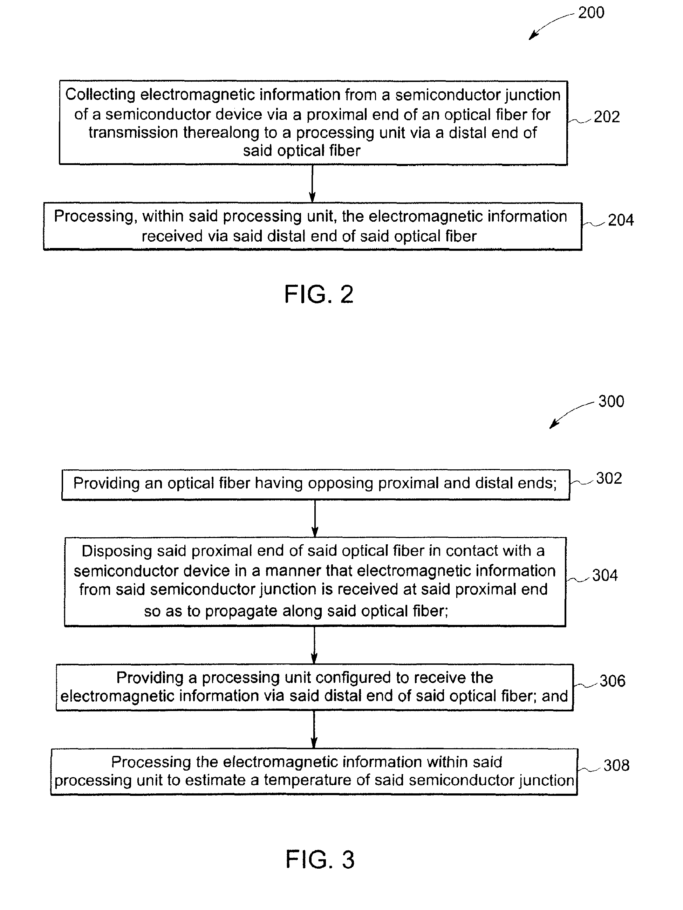

Referring to FIGS. 1 and 2, in one embodiment, a method 200 may include, at 202, collecting electromagnetic information from a semiconductor junction (for instance, of type 114) of a semiconductor device (for instance, of type 102, which device may be in operation) via a proximal end (for instance, of type 116) of an optical fiber (for instance, of type 112) for transmission therealong to a processing unit (for instance, of type 122) via a distal end (for instance, of type 118) of the optical fiber. The method 200 may further include, at 204, processing (say, within the processing unit 122) the electromagnetic information (for instance, of type 120) received via said distal end of said optical fiber.

Referring to FIGS. 1 and 3, in one embodiment, a method 300 may include providing, at 302, an optical fiber (for instance, of type 112) having opposing proximal and distal ends (for instance, of type 116 and 118 respectively). Method 300 may further include, at 304, disposing the proximal end of the optical fiber in contact with a semiconductor junction (for instance, of type 114) of a semiconductor device (for instance, of type 102) in a manner that electromagnetic information (for instance, of type 120) from the semiconductor junction is received at the proximal end so as to propagate along the optical fiber. Method 300 may further include, at 306, providing a processing unit (for instance, of type 122) configured to receive the electromagnetic information via the distal end of the optical fiber. Method 300 may further include, at 308, processing the electromagnetic information within the processing unit to estimate a temperature of the semiconductor junction.

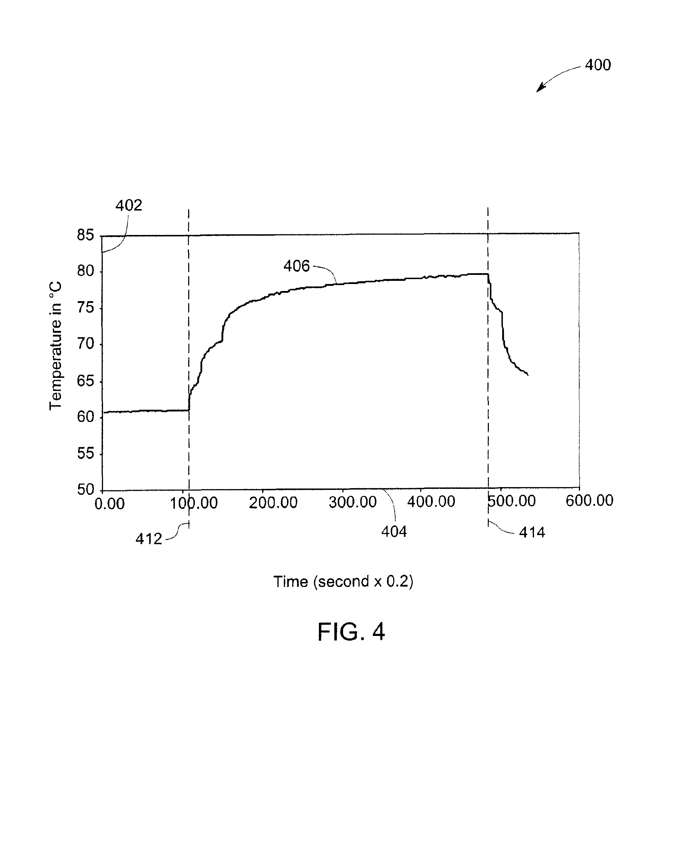

FIG. 4 presents representative results 400 of monitoring of the temperature of a semiconductor junction (of type 114) of semiconductor device (of type 102) of a semiconductor device system (of type 100). Along the ordinate 402 are plotted values of temperature of the semiconductor junction as a function of time (arbitrary units) shown along the abscissa 404. Substantially at a time 412, the semiconductor device was placed in operation, and the operation was allowed to continue till substantially time 414 when the operation was stopped. Substantially between the time period between 412 and 414, the semiconductor device was operated at a voltage of about 2000 volts, and a current of about 1000 amperes, which represent the design upper limits of operation of the semiconductor device 102. One of skill in the art may recognize that, throughout the said time period between 412 and 414, the semiconductor device experienced no untoward burden that hindered its ability to operate close to its design upper limits due said monitoring of temperature.

While only a limited number of embodiments have been described, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defmed by the following numbered clauses:
1. A system comprising:
   a semiconductor device including a semiconductor junction;
   an optical fiber, a proximal end of said optical fiber in electromagnetic communication with said semiconductor junction; and
   a processing unit in electromagnetic communication with a distal end of said optical fiber, said processing unit capable of receiving electromagnetic information available at said distal end and processing the electromagnetic information.
2. The system of clause 1, wherein said semiconductor junction is configured to produce electromagnetic information having wavelengths that lie within the infra red and visible spectrums.
3. The system of any preceding clause, wherein said processing the electromagnetic information includes processing the electromagnetic information to estimate a temperature of said semiconductor junction.
4. The system of any preceding clause, wherein the semiconductor device is a high power semiconductor device.
5. The system of any preceding clause, further comprising a protective layer disposed so as to conformally cover the semiconductor device.
6. The system of any preceding clause, wherein the protective layer is electrically insulating.
7. The system of any preceding clause, further comprising a housing.
8. The system of any preceding clause, wherein said housing includes an orifice.
9. The system of any preceding clause, further comprising a protective tubing.
10. The system of any preceding clause, wherein the protective tubing is electrically insulating.
11. The system of any preceding clause, wherein said optical fiber is disposed within the protective tubing.
12. A method comprising:
   collecting electromagnetic information from a semiconductor junction of a semiconductor device via a proximal end of an optical fiber for transmission therealong to a processing unit via a distal end of said optical fiber; and
   processing, within said processing unit, the electromagnetic information received via said distal end of said optical fiber.
13. The method of any preceding clause, wherein collecting electromagnetic information from a semiconductor junction includes collecting electromagnetic information from said semiconductor junction when the semiconductor device is in operation.
14. The method of any preceding clause, wherein said collecting electromagnetic information from a semiconductor junction includes collecting electromagnetic information having wavelengths that lie within the infra red and visible spectrums.
15. A method comprising:
   providing an optical fiber having opposing proximal and distal ends;
   disposing said proximal end of said optical fiber in contact with a semiconductor junction of a semiconductor device in a manner that electromagnetic information from said semiconductor junction is received at said proximal end so as to propagate along said optical fiber;
   providing a processing unit configured to receive the electromagnetic information via said distal end of said optical fiber; and
   processing the electromagnetic information within said processing unit to estimate a temperature of said semiconductor junction.
16. The method of any preceding clause, wherein said processing the electromagnetic information within said processing unit to estimate a temperature of said semiconductor junction includes processing electromagnetic information having wavelengths that lie within the infra red and visible spectrums within said processing unit to estimate a temperature of said semiconductor junction.

## Claims

1. A system (100) comprising:
a semiconductor device (103) including a semiconductor junction;
an optical fiber (112), a proximal end of said optical fiber in electromagnetic communication with said semiconductor junction; and
a processing unit in electromagnetic communication with a distal end of said optical fiber, said processing unit capable of receiving electromagnetic information available at said distal end and processing the electromagnetic information.

2. The system (100) of claim 1, wherein said semiconductor junction is configured to produce electromagnetic information having wavelengths that lie within the infra red and visible spectrums.

3. The system (100) of any preceding claim, wherein said processing the electromagnetic information includes processing the electromagnetic information to estimate a temperature of said semiconductor junction.

4. The system (100) of any preceding claim, wherein the semiconductor device is a high power semiconductor device.

5. The system (100) of any preceding claim, further comprising a protective layer disposed so as to conformally cover the semiconductor device.

6. The system (100) of any preceding claim, wherein the protective layer is electrically insulating.

7. The system (100) of any preceding claim, further comprising a housing.

8. The system (100) of any preceding claim, wherein said housing includes an orifice.

9. The system (100) of any preceding claim, further comprising a protective tubing.

10. The system (100) of any preceding claim, wherein the protective tubing is electrically insulating.

11. The system (100) of any preceding claim, wherein said optical fiber is disposed within the protective tubing.

12. A method (200) comprising:
collecting electromagnetic information from a semiconductor junction of a semiconductor device via a proximal end of an optical fiber for transmission therealong to a processing unit via a distal end of said optical fiber; and
processing, within said processing unit, the electromagnetic information received via said distal end of said optical fiber.

13. The method (200) of claim 12, wherein collecting electromagnetic information from a semiconductor junction includes collecting electromagnetic information from said semiconductor junction when the semiconductor device is in operation.

14. The method (200) of claim 12 or claim 13, wherein said collecting electromagnetic information from a semiconductor junction includes collecting electromagnetic information having wavelengths that lie within the infra red and visible spectrums.

15. A method (300) comprising:
providing an optical fiber having opposing proximal and distal ends;
disposing said proximal end of said optical fiber in contact with a semiconductor junction of a semiconductor device in a manner that electromagnetic information from said semiconductor junction is received at said proximal end so as to propagate along said optical fiber;
providing a processing unit configured to receive the electromagnetic information via said distal end of said optical fiber; and
processing the electromagnetic information within said processing unit to estimate a temperature of said semiconductor junction.
